# EUROPÄISCHE PATENTSCHRIFT

(11) **EP 2 877 374 B1**
(45) Veröffentlichungstag und Bekanntmachung des Hinweises auf die Patenterteilung: **04.09.2019**
(21) Anmeldenummer: 13740275.6
(22) Anmeldetag: 23.07.2013
(51) Int. Cl.: B60R 19/48, G01S 7/521, G01S 15/93, G10K 11/00, G10K 9/22

(54) **ULTRASCHALLSENSORANORDNUNG MIT EINEM ZWISCHENELEMENT, VORRICHTUNG UND VERFAHREN ZUM HERSTELLEN EINER ULTRASCHALLSENSORANORDNUNG FÜR EIN KRAFTFAHRZEUG**
ULTRASONIC SENSOR ARRANGEMENT COMPRISING AN INTERMEDIATE ELEMENT, DEVICE AND METHOD FOR PRODUCING AN ULTRASONIC SENSOR ARRANGEMENT FOR A MOTOR VEHICLE
ENSEMBLE CAPTEUR À ULTRASONS COMPORTANT UN ÉLÉMENT INTERMÉDIAIRE, DISPOSITIF ET PROCÉDÉ POUR FABRIQUER UN ENSEMBLE CAPTEUR À ULTRASONS POUR UN VÉHICULE À MOTEUR

(30) Priorität: 24.07.2012 DE 102012106700
(43) Veröffentlichungstag der Anmeldung: 03.06.2015
(73) Patentinhaber: Valeo Schalter und Sensoren GmbH, 74321 Bietigheim-Bissingen (DE); Volkswagen Aktiengesellschaft, 38440 Wolfsburg (DE)
(72) Erfinder: WEHLING, Hans-Wilhelm, 74074 Heilbronn (DE); WEYLAND, Joerg, 74336 Brackenheim (DE)
(74) Vertreter: Hofstetter, Schurack & Partner
(86) Internationale Anmeldenummer: PCT/EP2013/065499
(87) Internationale Veröffentlichungsnummer: WO 2014/016287

(56) Entgegenhaltungen:
- WO-A1-92/11654
- DE-A1-102008 016 558
- DE-A1-102008 017 067
- DE-A1-102010 049 818
- "CHAPTER 4: Material property charts ED - Ashby M F", 1. Januar 2005 (2005-01-01), MATERIALS SELECTION IN MECHANICAL DESIGN, AMSTERDAM [U.A.] : ELSEVIER BUTTERWORTH-HEINEMANN, PAGE(S) 45 - 78, XP007922204, ISBN: 978-0-7506-6168-3 das ganze Dokument

## Beschreibung

Die Erfindung betrifft eine Ultraschallsensoranordnung für ein Kraftfahrzeug, umfassend ein Verkleidungsteil - beispielsweise einen Stoßfänger - und einen Ultraschallsensor, welcher eine topfförmige Membran zum Aussenden und/oder Empfangen von Ultraschallsignalen aufweist, sowie umfassend ein um die Membran herum angeordnetes Versteifungselement mit einer Durchgangsöffnung, durch welche sich die Membran hindurch erstreckt, wobei der Ultraschallsensor und das Versteifungselement an einer Rückseite des Verkleidungsteils angeordnet sind, so dass der Ultraschallsensor zum Aussenden und/oder Empfangen der Ultraschallsignale durch das Verkleidungsteil hindurch ausgebildet ist. Die Erfindung betrifft auch eine Vorrichtung, wie auch ein Verfahren zum Herstellen einer genannten Ultraschallsensoranordnung.

Ultraschallsensoren sind bereits Stand der Technik und können in bekannter Weise im Frontbereich und im Heckbereich des Kraftfahrzeugs verbaut werden, nämlich beispielsweise an den Stoßfängern. Die Ultraschallsensoren sind Fahrerassistenzeinrichtungen zugeordnet und liefern Informationen über die Fahrzeugumgebung, und genauer gesagt über die Abstände zwischen dem Fahrzeug einerseits und den in seiner Umgebung befindlichen Hindernissen andererseits. Fahrerassistenzeinrichtungen können dabei beispielsweise Parkassistenzsysteme, Systeme zur Totwinkelüberwachung, Systeme zur Abstandshaltung, Spurüberwachungssysteme, Bremsassistenzsysteme und dergleichen sein.

Es ist bereits bekannt, dass derartige Ultraschallsensoren in Stoßfängern unverdeckt verbaut angeordnet sind. Dies bedeutet, dass sie in durchgängigen Aussparungen bzw. Durchgangsöffnungen in dem Stoßfänger angeordnet sind und außenseitig sichtbar sind. Hier erstreckt sich die topfförmige Membran des Ultraschallsensors - der so genannte Aluminiumtopf - durch die Durchgangsöffnung des Stoßfängers hindurch, so dass eine Frontseite bzw. Frontfläche der Membran mit der äußeren Oberfläche des Stoßfängers bündig abschließt.

Das Interesse gilt vorliegend jedoch einer verdeckten Anordnung eines Ultraschallsensors, wie sie beispielsweise aus dem Dokument DE 42 38 924 A1 oder aber aus dem Dokument DE 10 2008 018 110 A1 bekannt ist. Bei einer solchen versteckten Anordnung ist der Ultraschallsensor hinter dem Stoßfänger verdeckt angeordnet, so dass die Frontfläche der Membran an einer Rückseite des Stoßfängers anliegt und die Ultraschallwellen somit durch das Material des Stoßfängers hindurch ausgesendet und empfangen werden. Hier muss ein geeigneter Halter eingesetzt werden, um die Membran bzw. den gesamten Ultraschallsensor einschließlich der Membran an der Rückseite des Stoßfängers befestigen zu können. Es ist diesbezüglich bereits Stand der Technik, dass eine solche Halteeinrichtung über einen Klebstoff mit dem Stoßfänger fest verbunden wird, während der Ultraschallsensor selbst reversibel lösbar (und zerstörungsfrei lösbar) mit der Halteeinrichtung verbunden werden kann.

Bei den verdeckt angeordneten Ultraschallsensoren ist also die Membran hinter dem Stoßfänger angebracht, und die Ultraschallsignale werden durch das Material des Stoßfängers hindurch gesendet und empfangen. Dies bedeutet, dass auch ein bestimmter Bereich des Stoßfängers mitschwingt. Dieser schwingende Bereich des Stoßfängers soll mit Hilfe des aus Keramik gebildeten Versteifungselements begrenzt werden, und zwar vorzugsweise auf einen Bereich, dessen Größe dem Durchmesser der Membran entspricht. Die schwingende Fläche des Stoßfängers sollte demnach nur so groß wie der Durchmesser der Membran des Ultraschallsensors sein. Gerade aus diesem Grund wird das keramische Versteifungselement um die Membran herum eingesetzt, welches ringförmig ausgebildet ist und die Membran außenumfänglich umgibt, wobei zwischen der Membran und diesem Versteifungselement auch gegebenenfalls ein weichelastischer Entkopplungsring angeordnet sein kann. Das genannte Versteifungselement kann seine Funktion grundsätzlich nur dann erfüllen, wenn es mechanisch vollflächig fest mit der Rückseite des Stoßfängers verbunden ist. Nur bei einer kompletten flächigen festen Verbindung des Versteifungselements ist gewährleistet, dass keine unerwünscht hohen Schwingungen auf den restlichen Bereich des Stoßfängers übertragen werden.

Aus der DE 10 2010 049 818 A1 ist eine Anordnung mit einem Außenverkleidungsteil und einer Haltevorrichtung sowie einem verdeckt verbauten Ultraschallsensor bekannt. Der Ultraschallsensor weist nur einen Entkopplungsring auf.

Aus der DE 10 2008 016 558 A1 ist eine Baugruppe mit einem Stoßfänger und einem Ultraschallsensor bekannt, der verdeckt verbaut ist. Auch hier ist eine Halterung und ein Entkopplungsring vorgesehen.

Des Weiteren ist aus der DE 10 2008 017 067 A1 ein elektroakustischer Wandler bekannt, der verdeckt an einem Stoßfänger verbaut ist.

An die Verbindung zwischen dem Stoßfänger und dem Versteifungselement werden dabei sehr hohe Anforderungen gestellt: Die Verbindung muss über die gesamte Lebensdauer des Fahrzeugs sowie über den geforderten Temperaturbereich von -40 °C bis +90 °C aushalten. Eine besondere Herausforderung besteht dabei in der Auswahl eines speziellen Klebstoffes für diese Schnittstelle zwischen dem Stoßfänger - in den meisten Fällen besteht das Stoßfängermaterial aus Polypropylen mit Zusätzen - einerseits und dem - meist keramischen - Versteifungselement andererseits. Hier muss der Klebstoff die oben beschriebenen Anforderungen an die Haftung, Temperaturbeständigkeit, geringe Alterung, geringen Steifigkeitsverlust über Temperatur, geringe Schichtdicke, wie auch geringe Wasseraufnahme erfüllen. Eine zusätzliche Anforderung besteht darin, bei den unterschiedlichen Längenausdehnungskoeffizienten der beiden Verbindungspartner (PP-Kunststoff und Keramik) sowie bei einer nur 0,1 mm bis 0,2 mm dicken Klebeschicht eine besonders feste Verbindung sicherzustellen. Die auf dem Markt zur Verfügung stehenden Klebstoffe beinhalten einerseits weiche Klebstoffe, welche die Unterschiede in den Längenausdehnungskoeffizienten ausgleichen können, jedoch die Schwingungskräfte nur mit einem großen Wirkungsgradverlust übertragen, wie auch andererseits harte Klebstoffe, welche die Schwingungskräfte ohne einen großen Wirkungsgradverlust übertragen, jedoch spröde sind und somit nur eingeschränkt dazu in der Lage sind, die Änderungen in der Ausdehnung der Materialien auszugleichen. Alle Anforderungen gleichzeitig kann somit ein Klebstoff nicht erfüllen, ohne dass man ihn konstruktiv unterstützen muss. Die Auswahl des geeigneten Klebstoffs stellt somit einen Kompromiss dar.

Es ist Aufgabe der Erfindung, einen Weg aufzuzeigen, wie bei einer Ultraschallsensoranordnung der eingangs genannten Gattung eine im Vergleich zum Stand der Technik verbesserte Verbindung zum Verkleidungsteil ermöglicht werden kann.

Diese Aufgabe wird erfindungsgemäß durch eine Ultraschallsensoranordnung, durch eine Vorrichtung, wie auch durch ein Verfahren mit den Merkmalen gemäß den jeweiligen unabhängigen Patentansprüchen gelöst. Vorteilhafte Ausführungen der Erfindung sind Gegenstand der abhängigen Patentansprüche, der Beschreibung und der Figuren.

Eine erfindungsgemäße Ultraschallsensoranordnung für ein Kraftfahrzeug umfasst ein Verkleidungsteil und einen Ultraschallsensor, welcher eine topfförmige Membran zum Aussenden und/oder Empfangen von Ultraschallsignalen aufweist. Die Anordnung umfasst auch ein um die Membran herum angeordnetes Versteifungselement mit einer Durchgangsöffnung, durch welche sich die Membran hindurch erstreckt, wobei der Ultraschallsensor und das Versteifungselement an einer Rückseite des Verkleidungsteils angeordnet sind, so dass der Ultraschallsensor zum Aussenden und/oder Empfangen der Ultraschallsignale durch das Verkleidungsteil hindurch ausgebildet ist. Zwischen der Rückseite des Verkleidungsteils und einer dem Verkleidungsteil zugewandten Frontseite des Versteifungselements ist ein plattenförmiges Zwischenelement angeordnet, welches an der Rückseite des Verkleidungsteils einerseits und an der Frontseite des Versteifungselements andererseits anliegt und aus einem anderen Material als das Versteifungselement und das Verkleidungsteil gebildet ist.

Die Erfindung basiert auf der Erkenntnis, dass sich die - vorzugsweise aus Keramik gebildeten - benötigten Versteifungselemente mit dem heutzutage in der Regel aus einem PP-Kunststoff (Polypropylen) nur schwer verbinden lassen, weil die beiderseitigen Materialien in ihren jeweiligen Eigenschaften sehr unterschiedliche sind und beispielsweise auch deutlich unterschiedliche Längenausdehnungskoeffizienten besitzen. So beträgt der Längenausdehnungskoeffizient des PP-Kunststoffs von 45 bis 65 µm/mK, während der Längenausdehnungskoeffizient von Keramik etwa 6,5 µm/mK beträgt. Somit lässt sich Keramik mit dem PP-Kunststoff und folglich auch das Versteifungselement mit dem Verkleidungsteil nur schwierig verbinden, und diese Verbindung ist für den Betrieb eines Ultraschallsensors nur unzureichend. Die Erfindung basiert weiterhin auf der Erkenntnis, dass dieser Nachteil des Standes der Technik dadurch umgangen werden kann, dass zwischen dem Versteifungselement und dem Verkleidungsteil ein Zwischenelement eingesetzt wird, welches aus einem anderen Material gebildet ist, dessen Längenausdehnungskoeffizient vorzugsweise zwischen dem Längenausdehnungskoeffizienten des Materials des Verkleidungsteils einerseits und dem Längenausdehnungskoeffizienten des Materials des Versteifungselements andererseits liegt. Somit können unterschiedliche Klebstoffe eingesetzt werden, nämlich ein erster Klebstoff zur Verbindung des Zwischenelements mit dem Versteifungselement einerseits sowie ein zweiter Klebstoff zur Verbindung des Zwischenelements mit dem Verkleidungsteil andererseits.

Also kann in einer Ausführungsform vorgesehen sein, dass das Versteifungselement aus Keramik gebildet ist. Gerade dann erweist sich der Einsatz eines genannten Zwischenelements als besonders vorteilhaft.

In einer Ausführungsform kann - wie bereits ausgeführt - vorgesehen sein, dass das Material des Zwischenelements einen Längenausdehnungskoeffizienten aufweist, welcher zwischen den Koeffizienten der jeweiligen Materialien des Verkleidungsteils und des Versteifungselements liegt. Es wird als Material des Zwischenelements ein Metall, insbesondere Aluminium, verwendet. Eine Aluminiumscheibe kann kostengünstig beispielsweise aus einem beschichteten Blech ausgestanzt und gegebenenfalls sogar gebogen werden. Außerdem besitzt Aluminium einen Längenausdehnungskoeffizienten von etwa 23 µm/mK, so dass dieser Koeffizient zwischen den Koeffizienten von Keramik einerseits und PP-Kunststoff andererseits liegt.

Vorzugsweise liegt eine Dicke des Zwischenelements in einem Wertebereich von 0,2 mm bis 0,4 mm. Diese Dicke kann beispielsweise 0,3 mm betragen. Bei einer solchen Dicke des Zwischenelements gibt es keinen schwingungstechnischen Verlust, so dass der Wirkungsgrad maximal bleibt.

In einer Ausführungsform ist vorgesehen, dass das Zwischenelement mit einer Beschichtung ausgebildet ist. Es kann beispielsweise aus einem beschichteten Blech gebildet sein. Das scheibenartige Zwischenelement kann dabei mit der sogenannten KTL-Beschichtung versehen werden, also durch die Kathodische Tauchlackierung bzw. "Kataphorese". Eine solche Beschichtung lässt sich insbesondere sehr dünn und in kleiner Toleranz auf Aluminium anwenden. Ein derartiges beschichtetes Zwischenelement lässt sich dann ohne eine größere Vorbehandlung mit Keramik verkleben, nämlich insbesondere über einen sehr dünnen (beispielsweise 0,1 mm dünnen) Acryl-Sekundenkleber. Zu diesem Zwecke gibt es auch viele andere Klebstoffe. Die Beschichtung des Zwischenelements, nämlich insbesondere auf beiden Seiten, hat den Vorteil, dass dieses Zwischenelement sich somit besonders leicht und zuverlässig verkleben lässt.

Das Zwischenelement ist einerseits mit der Rückseite des Verkleidungsteils und andererseits mit der Frontseite des Versteifungselements verklebt. Somit ist eine feste Verbindung gewährleistet. Dabei erweist es sich als besonders vorteilhaft, wenn die Verklebung des Zwischenelements mit dem Verkleidungsteil durch einen anderen Klebstoff als die Verklebung des Zwischenelements mit dem Versteifungselement realisiert ist. Dies bedeutet, dass das Zwischenelement einerseits über einen ersten Klebstoff mit dem Verkleidungsteil und andererseits über einen zweiten Klebstoff mit dem Versteifungselement verbunden ist. Zwischen dem Zwischenelement und dem Verkleidungsteil kann dabei ein Klebstoff eingesetzt werden, welcher gut auf dem PP-Kunststoff hält. Es kann an dieser Stelle auch ein Klebstoff verwendet werden, welcher den PP-Kunststoff des Verkleidungsteils anlöst und außerdem auf dem Zwischenelement besonders gut haftet. Auf der anderen Seite lässt sich das Zwischenelement mit dem Versteifungselement insbesondere mit Hilfe eines Acryl-Sekundenklebers verbinden. Durch Verwendung von zwei unterschiedlichen Klebstoffen kann somit eine besonders wirkungsvolle Verbindung zwischen dem Zwischenelement und dem Verkleidungsteil sowie auf der anderen Seite zwischen dem Zwischenelement und dem Versteifungselement erreicht und somit insgesamt eine zuverlässige Befestigung des Versteifungselements an dem Verkleidungsteil gewährleistet werden.

Es kann vorgesehen sein, dass das Zwischenelement in seinem radialen Randbereich einen zumindest teilweise umlaufenden Steg bzw. Kragen aufweist, welcher mit einem Kunststoffmaterial umspritzt ist. Insbesondere ist durch das Kunststoffmaterial zumindest ein Rastelement an diesen Steg angeformt. Über ein solches Rastelement kann das Zwischenelement und somit auch das Versteifungselement mit einem Halter verbunden bzw. verrastet werden, welcher zur Halterung des Ultraschallsensors dient und mit dem Ultraschallsensor beispielsweise reversibel lösbar verbindbar ist. Der genannte Steg erstreckt sich dabei in axialer Richtung, so dass dieser Steg mit der Frontseite des Versteifungselements bzw. der Rückseite des Verkleidungsteils einen rechten Winkel einschließt. Durch Vorsehen eines Rastelements an dem Zwischenelement braucht somit ein solches Rastelement nicht an das Versteifungselement angeformt zu werden, was die Herstellung des Versteifungselements vereinfacht.

Hinsichtlich der Anordnung der Membran des Ultraschallsensors können nun zwei alternative Ausführungsformen vorgesehen sein:
Zum einen kann das Zwischenelement eine mit der Durchgangsöffnung des Versteifungselements konzentrisch angeordnete Durchgangsöffnung aufweisen, durch welche sich die Membran des Ultraschallsensors hindurch erstreckt. Somit ist die Membran in Anlage mit der Rückseite des Verkleidungsteils gebracht und mit dieser beispielsweise verklebt. Somit steht die Frontfläche bzw. die Frontseite der Membran in einem direkten Kontakt mit dem Verkleidungsteil, so dass auch die Schwingungen der Membran besonders zuverlässig auf das Verkleidungsteil übertragen werden können.

Zum anderen kann jedoch auch vorgesehen sein, dass das Zwischenelement einen Zentralbereich aufweist, welcher zwischen der Membran und der Rückseite des Verkleidungsteils angeordnet ist, so dass der Zentralbereich des Zwischenelements an der Frontseite der Membran einerseits und an der Rückseite des Verkleidungsteils andererseits anliegt. Somit befindet sich das Zwischenelement auch zwischen der Membran und dem Verkleidungsteil. Der Zentralbereich hat dabei bevorzugt den gleichen Durchmesser wie die Membran. Eine solche Ausgestaltung des Zwischenelements hat den Vorteil, dass dadurch die Abstrahlcharakteristik des Ultraschallsensors gezielt durch die Ausgestaltung dieses Zentralbereiches beeinflusst werden kann.

In dem Zwischenelement kann dabei zumindest ein Schlitz ausgebildet sein, mittels welchem der Zentralbereich schwingungstechnisch von einem restlichen Bereich des Zwischenelements entkoppelt ist, welcher mit dem Versteifungselement in Anlage gebracht ist. Es können insgesamt mehrere solche Schlitze ausgebildet sein, welche als Ringsektoren ausgebildet sind und insgesamt den kreisförmigen Zentralbereich von dem restlichen Bereich entkoppeln. Es können beispielsweise vier solche ringsektorförmige Schlitze ausgebildet sein, welche insgesamt die Form eines Ringes aufweisen und in Umfangsrichtung in einem geringen Abstand voneinander ausgebildet sind.

Bevorzugt ist die Frontseite der Membran mit dem Zentralbereich verklebt. Auch der Zentralbereich kann auf der anderen Seite mit dem Verkleidungsteil verklebt sein. Somit ist eine gute schwingungstechnische Anbindung gewährleistet.

Die Verklebung der Frontseite der Membran mit dem Zentralbereich oder alternativ mit dem Verkleidungsteil direkt kann durch einen anderen Klebstoff als die Verklebung des Versteifungselements mit dem Zwischenelement und/oder als die Verklebung des Zwischenelements mit dem Verkleidungsteil realisiert werden. Es können also insgesamt drei unterschiedliche Klebstoffe speziell und situationsgerecht für die benötigten Verbindungen verwendet werden. So kann zwischen der Membran und ihrem Verbindungspartner ein Klebstoff eingesetzt werden, welcher es ermöglicht, dass der Ultraschallsensor im Reparaturfall leicht entnommen werden kann, ohne dass das Verkleidungsteil oder aber das Zwischenelement zerstört wird. Auch zwischen dem Zwischenelement und dem Versteifungselement kann ein Klebstoff eingesetzt werden, der so ausgelegt ist, dass sich diese Verbindung im Reparaturfall leicht lösen lässt. Auf der anderen Seite kann das Zwischenelement mit dem Verkleidungsteil mit Hilfe eines Klebstoffs verbunden werden, welcher eine dauerhafte und besonders haftfeste Verbindung ermöglicht. Hier soll diese Klebstelle auch im Reparaturfall nicht mehr gelöst werden können, sondern das Zwischenelement kann dauerhaft an dem Verkleidungsteil verbleiben und so Schäden am Verkleidungsteil im Reparaturfall verhindern. Ein weiterer Vorteil ist dabei, dass der Ultraschallsensor und das Versteifungselement sowie ein Halter bereits vor der Auslieferung montiert und geprüft werden können, so dass ein Fahrzeughersteller nur eine komplett geprüfte Einheit mit lediglich einem Klebertyp verkleben braucht.

Eine erfindungsgemäße Vorrichtung für ein Kraftfahrzeug umfasst einen Ultraschallsensor mit einer topfförmigen Membran sowie ein um die Membran herum angeordnetes Versteifungselement mit einer Durchgangsöffnung, durch welche sich die Membran hindurch erstreckt. An einer vom Ultraschallsensor abgewandten Frontseite des Versteifungselements ist ein plattenförmiges Zwischenelement anliegend angeordnet, über welches das Versteifungselement an einer Rückseite eines Verkleidungsteils des Kraftfahrzeugs befestigbar ist und welches aus einem anderen Material als das Versteifungselement gebildet ist.

Ein erfindungsgemäßes Verfahren dient zum Herstellen einer Ultraschallsensoranordnung für ein Kraftfahrzeug durch Bereitstellen eines Verkleidungsteils und eines Ultraschallsensors mit einer Membran, wie auch durch Bereitstellen eines Versteifungselements mit einer Durchgangsöffnung, durch welche die Membran hindurch gesteckt wird, wobei der Ultraschallsensor und das Versteifungselement an einer Rückseite des Verkleidungsteils angeordnet werden und der Ultraschallsensor die Ultraschallsignale durch das Verkleidungsteil hindurch aussendet und/oder empfängt. Zwischen der Rückseite des Verkleidungsteils und einer dem Verkleidungsteil zugewandten Frontseite des Versteifungselements wird ein plattenförmiges, insbesondere ringförmiges oder kreisförmiges, Zwischenelement angeordnet, welches mit der Rückseite des Verkleidungsteils einerseits und mit der Frontseite des Versteifungselements andererseits in Anlage gebracht wird und welches aus einem anderen Material als das Versteifungselement und das Verkleidungsteil gebildet wird.

Die mit Bezug auf die erfindungsgemäße Anordnung vorgestellten bevorzugten Ausführungsformen und deren Vorteile gelten entsprechend für die erfindungsgemäße Vorrichtung sowie für das erfindungsgemäße Verfahren.

Weitere Merkmale der Erfindung ergeben sich aus den Ansprüchen, den Figuren und der Figurenbeschreibung. Alle vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder aber in Alleinstellung verwendbar.

Die Erfindung wird nun anhand einzelner bevorzugter Ausführungsbeispiele, wie auch unter Bezugnahme auf die beigefügten Zeichnungen, näher erläutert.

Es zeigen:
- Fig. 1: in schematischer Darstellung eine Schnittansicht durch eine Ultraschallsensoranordnung mit einer Vorrichtung gemäß einer ersten Ausführungsform der Erfindung;
- Fig. 2: in schematischer Darstellung eine Schnittansicht durch eine Anordnung mit einer Vorrichtung gemäß einer zweiten Ausführungsform der Erfindung;
- Fig. 3: in schematischer und perspektivischer Darstellung ein Zwischenelement einer Vorrichtung gemäß einer dritten Ausführungsform der Erfindung; und
- Fig. 4: in schematischer und perspektivischer Darstellung die Vorrichtung gemäß der dritten Ausführungsform.

In den Figuren werden gleiche oder funktionsgleiche Elemente mit den gleichen Bezugszeichen versehen.

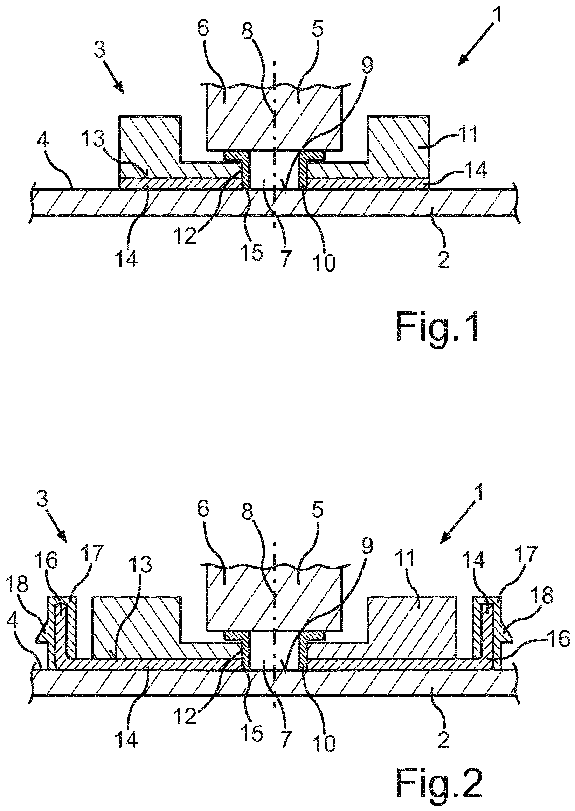

Eine in Fig. 1 dargestellte Ultraschallsensoranordnung 1 eines Kraftfahrzeugs, insbesondere eines Personenkraftwagens, umfasst ein Verkleidungsteil 2 des Kraftfahrzeugs, nämlich beispielsweise einen Stoßfänger. Sie umfasst außerdem eine Vorrichtung 3, welche eine Ultraschallsensorvorrichtung ist und an einer Rückseite 4 des Verkleidungsteils 2 anliegend angeordnet ist. Die Vorrichtung 3 umfasst einen Ultraschallsensor 5 mit einem Sensorgehäuse 6, welches zylinderförmig ausgebildet ist, sowie mit einer topfförmigen Membran 7, insbesondere aus Aluminium, welche aus dem Sensorgehäuse 6 in axialer Richtung bzw. entlang einer Längsachse 8 des Ultraschallsensors 5 herausragt. Eine dem Verkleidungsteil 2 zugewandte Frontseite 9 der Membran 7 liegt im Ausführungsbeispiel gemäß Fig. 1 direkt an der Rückseite 4 des Verkleidungsteils 2 an, so dass die Ultraschallsignale des Ultraschallsensors 5 durch das Material des Verkleidungsteils 2 hindurch gesendet und empfangen werden. Das Verkleidungsteil 2 ist beispielsweise aus dem PP-Kunststoff gebildet.

Die Frontseite 9 der Membran 7 ist mit der Rückseite 4 des Verkleidungsteils 2 im Ausführungsbeispiel gemäß Fig. 1 verklebt.

Die Membran 7 ist topfförmig ausgebildet und hat somit die Form eines Zylinders mit der abgeschlossenen Frontseite 9. Um die Membran 7 herum ist ein umlaufender Entkopplungsring 10 angeordnet, welcher aus einem weich-elastischen Material gebildet ist, nämlich beispielsweise aus einem silikonartigen Material. Der Entkopplungsring 10 liegt direkt an dem Außenumfang der Membran 7 an und umgreift somit die Membran 7 vollständig außenumfänglich. Um diesen Entkopplungsring 10 herum wiederum ist ein aus Keramik gebildetes Versteifungselement 11 angeordnet. Dieses Versteifungselement 11 ist ringförmig ausgebildet und hat eine zentrale Durchgangsöffnung 12, durch welche sich die Membran 7 mit dem Entkopplungsring 10 hindurch erstreckt, um an der Rückseite 4 des Verkleidungsteils 2 anliegen zu können. Das Versteifungselement 11 ist also um die Membran 7 herum angeordnet. Es hat die Funktion der Begrenzung des schwingenden Bereiches des Verkleidungsteils 2, so dass lediglich ein in Anlage mit der Membran 7 gebrachter Bereich des Verkleidungsteils 2 zusammen mit der Membran 7 mitschwingt. Der weitere Bereich des Verkleidungsteils 2 wird von dieser Schwingung entkoppelt, nämlich mit Hilfe des Versteifungselements 11. Der sich mit dem Versteifungselement 11 überlappende Bereich des Verkleidungsteils 2 schwingt also nicht. Das Versteifungselement 11 kann also auch die Senderichtcharakteristik der Vorrichtung 3 beeinflussen.

Das Versteifungselement 11 hat eine Frontseite 13, welche dem Verkleidungsteil 2 zugewandt ist. Zwischen dieser Frontseite 13 einerseits und der Rückseite 4 des Verkleidungsteils 2 andererseits ist ein Zwischenelement 14 angeordnet, welches einerseits an der Frontseite 13 und andererseits an der Rückseite 4 anliegt. Das Zwischenelement 14 ist plattenförmig und ringförmig ausgebildet und hat somit die gleiche Form wie das Versteifungselement 11. Dieses Zwischenelement 14 ist jedoch deutlich dünner als das Versteifungselement 11 und hat eine Dicke von beispielsweise 0,3 mm. Das Zwischenelement 14 wird aus Aluminium gebildet, so dass sein Längenausdehnungskoeffizient zwischen dem Koeffizienten des keramischen Versteifungselements 11 und dem Koeffizienten des aus Kunststoff gebildeten Verkleidungsteils 2 liegt. Die Aluminiumscheibe kann kostengünstig und ohne viel Aufwand vorzugsweise aus einem beschichteten Blech ausgestanzt werden. Das Zwischenelement 14 kann auch mit einer KTL-Beschichtung versehen werden, welche sich dann besonders gut verkleben lässt. Somit lässt sich das Zwischenelement 14 beidseitig auch besonders dünn und in kleiner Toleranz beschichten.

Im Ausführungsbeispiel gemäß Fig. 1 hat das Zwischenelement 14 ebenfalls eine Durchgangsöffnung 15, welche konzentrisch mit der Durchgangsöffnung 12 angeordnet ist und beispielsweise den gleichen Durchmesser aufweist. Durch diese Durchgangsöffnung 15 erstreckt sich auch die Membran 7 hindurch, um in Anlage mit der Rückseite 4 des Verkleidungsteils 2 gelangen zu können.

Im Ausführungsbeispiel gemäß Fig. 1 hat das Zwischenelement 14 den gleichen Durchmesser wie das Versteifungselement 11.

Einerseits wird das Zwischenelement 14 mit der Rückseite 4 des Verkleidungsteils 2 verklebt; andererseits wird das Zwischenelement 14 mit dem Versteifungselement 11 verklebt. Man hat also insgesamt drei Verbindungspartner, nämlich das Versteifungselement 11, das Zwischenelement 14 sowie das Verkleidungsteil 2. Eine weitere Verbindung entsteht auch zwischen der Membran 7 und dem Verkleidungsteil 2. Insgesamt können somit drei verschiedene Klebstoffe verwendet werden, welche dann bedarfsabhängig und situationsangepasst ausgewählt werden können.

Im Ausführungsbeispiel gemäß Fig. 1 kann das Versteifungselement 11 auch Rastelemente aufweisen, welche an dem Außenumfang des Versteifungselements 11 ausgebildet sind (in den Fig. nicht dargestellt). Durch diese Rastelemente kann das Versteifungselement 11 dann mit einem Halter reversibel lösbar verbunden werden, welcher zur Halterung des Ultraschallsensors 5, und genauer gesagt des Sensorgehäuses 6, dient.

Die Montage der Anordnung 1 kann wie folgt erfolgen: Zunächst kann das Zwischenelement 14 mit Hilfe eines Klebstoffs auf das Versteifungselement 11 aufgeklebt werden. Der oben genannte Halter kann nun mit dem Versteifungselement 11 lösbar verbunden werden. Anschließend kann der Ultraschallsensor 5 mit dem Entkopplungsring 10 versehen werden und in den zusammengebauten Halter eingerastet und somit ebenfalls reversibel lösbar verbunden werden. Die montierte Baugruppe, und speziell das beschichtete Zwischenelement 14, wird dann mit einem Klebstoff bestrichen und gegen das Verkleidungsteil 2 gedrückt und verklebt.

Eine Anordnung 1 gemäß einer zweiten Ausführungsform ist in Fig. 2 dargestellt. Hier entspricht diese Anordnung bzw. die Vorrichtung 3 grundsätzlich der gemäß Fig. 1, wobei das aus Aluminium gebildete Zwischenelement 14 zusätzlich noch mit einem umlaufenden Kragen bzw. Steg 16 ausgebildet ist, der sich entlang der Längsachse 8 erstreckt und etwa die gleiche Höhe wie das Versteifungselement 11 aufweisen kann. Dieser Steg 14 des einstückig ausgebildeten Zwischenelements 14 schließt also einen rechten Winkel mit dem restlichen Bereich des Zwischenelements 14 ein, welcher in Anlage mit dem Versteifungselement 11 gebracht ist. Ein solches Zwischenelement 14 kann aus einem beschichteten Blech ausgestanzt und gebogen werden. Der Steg 16 ist umlaufend ausgebildet und umgibt somit das Versteifungselement 11 außenumfänglich.

Der Steg 16 ist außerdem mit einem Kunststoffmaterial 17 oder einem anderen Material umspritzt, wobei an den Außenumfang des Stegs 16 Rastelemente 18 in Form von Rastnasen angeformt sind. Somit übernimmt das Zwischenelement 14 zusätzlich noch die Funktion der Verbindung mit dem oben genannten Halter für den Ultraschallsensor 5. Das Zwischenelement 14 kann nämlich mit dem Halter zerstörungsfrei und reversibel lösbar verbunden werden. Die Montage erfolgt also auf die oben beschriebene Art und Weise, jedoch mit dem Unterschied, dass nicht das Versteifungselement 11, sondern das Zwischenelement 14 mit dem Halter verrastet wird.

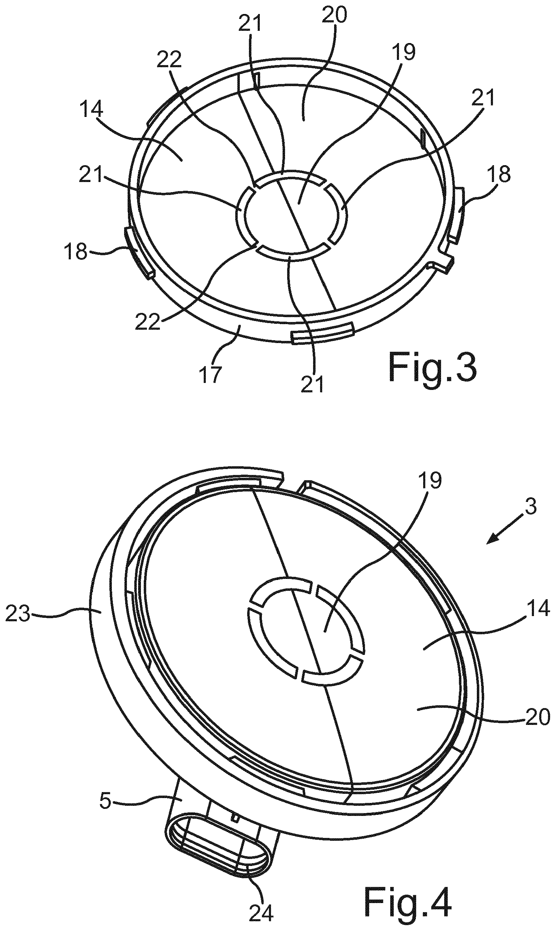

Eine noch weitere Ausführungsform des Zwischenelements 14 ist in Fig. 3 näher dargestellt. Hier ist alleine das Zwischenelement 14 gezeigt. Das Zwischenelement 14 gemäß Fig. 3 entspricht im Wesentlichen dem gemäß Fig. 2, wobei keine Durchgangsöffnung im Zwischenelement 14 ausgebildet ist. Stattdessen weist das Zwischenelement 14 einen kreisförmigen Zentralbereich 19 auf, welcher den gleichen Durchmesser wie die Membran 7 aufweisen kann. Der Zentralbereich 19 ist von einem restlichen, ringförmigen Bereich 20 des Zwischenelements 14 schwingungstechnisch entkoppelt. Zu diesem Zwecke sind im Ausführungsbeispiel gemäß Fig. 3 insgesamt vier Schlitze 21 ausgebildet, welche jeweils die Form eines Ringsektors aufweisen. Diese Schlitze 21 sind beispielsweise 90°-Ringsektoren. Somit ist der Zentralbereich 19 über vier Stege 22 mit dem restlichen Bereich 20 verbunden, welche äquidistant in Umfangsrichtung verteilt angeordnet sind.

Im Ausführungsbeispiel gemäß Fig. 3 ist die Membran 7 also nicht in direkter Anlage mit der Rückseite 4 des Verkleidungsteils 2 gebracht, sondern mit dem Zentralbereich 19. Dieser liegt also einerseits direkt an der Frontseite 9 der Membran 7 sowie andererseits an der Rückseite 4 des Verkleidungsteils 2 an.

Durch Einsatz des Zentralbereiches 19 des Aluminiumbodens kann auch die Dicke der Frontseite 9 der Membran 7 reduziert werden, weil dieser Zentralbereich 19 quasi auch einen Teil der Membran 7 bildet. Ist im Stand der Technik der Membranboden beispielsweise 0,8 mm dick, so kann bei einem 0,3 mm dünnen Zwischenelement 14 nun eine Membran mit 0,5 mm Dicke hergestellt werden, damit die gleiche Funktion bzw. die gleiche Frequenz aufrechterhalten werden kann. Ein weiterer Vorteil besteht darin, dass die Membran 7 und die Keramik des Versteifungselements 11 mit unterschiedlichen Klebstoffen unterschiedlicher Klebekraft mit dem Zwischenelement 14 verklebt werden können.

Man kann hier also auch drei unterschiedliche Klebstoffe speziell für die benötigten Verbindungen verwenden. Einerseits kann die Membran 7 mit dem beschichteten Aluminium mit Hilfe eines Klebstoffs verbunden werden, welcher so ausgelegt ist, dass der Ultraschallsensor 5 leicht von dem Zwischenelement 14 wieder gelöst werden kann. Ein entsprechender Klebstoff kann auch zwischen dem Zwischenelement 14 und dem keramischen Versteifungselement 11 eingesetzt werden, wobei hier auch die unterschiedlichen Längenausdehnungskoeffizienten berücksichtigt werden können. Schließlich kann zwischen dem Zwischenelement 14 und dem Verkleidungsteil 2 ein Klebstoff eingesetzt werden, der so ausgelegt ist, dass diese Klebstelle auch im Reparaturfall nicht mehr gelöst wird. Das Zwischenelement 14 kann also dauerhaft mit dem Verkleidungsteil 2 verklebt werden. Ein großer Vorteil besteht dabei darin, dass der Ultraschallsensor 5 im Voraus mit dem Halter montiert und auch geprüft werden kann, so dass beim Fahrzeughersteller nur noch eine komplett geprüfte Einheit mit Hilfe eines Klebstoffs an dem Verkleidungsteil 2 befestigt werden braucht.

Wenn auch eine Demontage des Zwischenelements 14 vom Verkleidungsteil 2 erforderlich ist, so kann auch vorgesehen sein, dass durch das Zwischenelement 14 ein elektrischer Strom bereitgestellt werden kann, um die Klebestelle wieder zu lösen. Somit wird das Material des Zwischenelements 14 erwärmt, so dass auch der Klebstoff mit größerer Temperatur seine Haftfestigkeit verliert. Somit kann das Zwischenelement 14 von dem Verkleidungsteil 2 wieder gelöst werden, ohne dass das Verkleidungsteil 2 beschädigt wird. Für die elektrische Kontaktierung des Zwischenelements 14 können an dieses beispielsweise zwei Laschen bzw. auch zwei Flächen angeformt werden, welche mit keiner Beschichtung versehen sind. Sobald der Klebstoff weich ist, kann die gesamte Vorrichtung 3 abgedreht und entnommen werden.

In Fig. 4 ist in schematischer und perspektivischer Darstellung eine Vorrichtung 3 mit dem Zwischenelement 14 gemäß Fig. 3 gezeigt, wobei die dem Verkleidungsteil zugewandte Frontseite dargestellt ist. Hier ist auch ein Halter 23 dargestellt, welcher mit dem Steg 16 bzw. mit dem Kunststoffmaterial 17 des Zwischenelements 14 über die Rastelemente 18 verrastet ist. Dieser Halter dient zur Halterung des Ultraschallsensors 5, von welchem in Fig. 4 lediglich ein Stecker 24 dargestellt ist. Wie aus Fig. 4 hervorgeht, hat der Halter 23 einen umlaufenden Untersatz mit einer Aufnahme, in welcher das Zwischenelement 14 aufgenommen ist. Die in Fig. 4 dargestellte Vorderseite des Zwischenelements 14 bzw. seines Bodens kann nun mit dem Verkleidungsteil 2 verklebt werden. Eine solche Einheit, wie sie in Fig. 4 dargestellt ist, kann bereits nach einer Funktionsprüfung ausgeliefert werden.

## Patentansprüche

1. Ultraschallsensoranordnung (1) für ein Kraftfahrzeug, mit einem Verkleidungsteil (2) und einem Ultraschallsensor (5), welcher eine topfförmige Membran (7) zum Aussenden und/oder Empfangen von Ultraschallsignalen aufweist, und mit einem um die Membran (7) herum angeordneten Versteifungselement (11) mit einer Durchgangsöffnung (12), durch welche sich die Membran (7) hindurch erstreckt, wobei der Ultraschallsensor (5) und das Versteifungselement (11) an einer Rückseite (4) des Verkleidungsteils (2) angeordnet sind, sodass der Ultraschallsensor (5) zum Aussenden und/oder Empfangen der Ultraschallsignale durch das Verkleidungsteil (2) hindurch ausgebildet ist,
**dadurch gekennzeichnet, dass**
zwischen der Rückseite (4) des Verkleidungsteils (2) und einer dem Verkleidungsteil (2) zugewandten Frontseite (13) des Versteifungselements (11) ein plattenförmiges Zwischenelement (14) aus Metall angeordnet ist, welches an der Rückseite (4) des Verkleidungsteils (2) einerseits und an der Frontseite (13) des Versteifungselements (11) andererseits anliegt und aus einem anderen Material als das Versteifungselement (11) und das Verkleidungsteil (2) gebildet ist, wobei das Material des Zwischenelements (14) einen Längenausdehnungskoeffizienten aufweist, welcher zwischen den Koeffizienten der jeweiligen Materialien des Versteifungselements (11) und des Verkleidungsteils (2) liegt, wobei das Zwischenelement (14) einerseits mit der Rückseite (4) des Verkleidungsteils (2) und andererseits mit der Frontseite (13) des Versteifungselements (11) verklebt ist.

2. Ultraschallsensoranordnung (1) nach Anspruch 1,
**dadurch gekennzeichnet, dass**
das Versteifungselement (11) aus Keramik gebildet ist.

3. Ultraschallsensoranordnung (1) nach Anspruch 1 oder 2,
**dadurch gekennzeichnet, dass**
das Material des Zwischenelements (14) Aluminium ist.

4. Ultraschallsensoranordnung (1) nach einem der vorhergehenden Ansprüche,
**dadurch gekennzeichnet, dass**
eine Dicke des Zwischenelements (14) in einem Wertebereich von 0,2 mm bis 0,4 mm liegt, insbesondere 0,3 mm beträgt.

5. Ultraschallsensoranordnung (1) nach einem der vorhergehenden Ansprüche,
**dadurch gekennzeichnet, dass**
das Zwischenelement (14) mit einer Beschichtung ausgebildet ist.

6. Ultraschallsensoranordnung (1) nach einem der vorhergehenden Ansprüche,
**dadurch gekennzeichnet, dass**
die Verklebung des Zwischenelements (14) mit dem Verkleidungsteil (2) durch einen anderen Klebstoff als die Verklebung mit dem Versteifungselement (11) realisiert ist.

7. Ultraschallsensoranordnung (1) nach einem der vorhergehenden Ansprüche,
**dadurch gekennzeichnet, dass**
das Zwischenelement (14) in seinem radialen Randbereich einen zumindest teilweise umlaufenden Steg (16) aufweist, welcher mit einem Kunststoffmaterial (17) umspritzt ist, wobei insbesondere durch das Kunststoffmaterial (17) zumindest ein Rastelement (18) an den Steg (16) angeformt ist.

8. Ultraschallsensoranordnung (1) nach einem der vorhergehenden Ansprüche,
**dadurch gekennzeichnet, dass**
das Zwischenelement (14) eine mit der Durchgangsöffnung (12) des Versteifungselements (11) konzentrisch angeordnete Durchgangsöffnung (15) aufweist, durch welche sich die Membran (7) des Ultraschallsensors (5) hindurch erstreckt, wobei die Membran (7) in Anlage mit der Rückseite (4) des Verkleidungsteils (2) gebracht ist.

9. Ultraschallsensoranordnung (1) nach einem der Ansprüche 1 bis 7,
**dadurch gekennzeichnet, dass**
das Zwischenelement (14) einen Zentralbereich (19) aufweist, welcher zwischen der Membran (7) des Ultraschallsensors (5) und der Rückseite (4) des Verkleidungsteils (2) angeordnet ist, sodass der Zentralbereich (19) an einer Frontseite (9) der Membran (7) einerseits und an der Rückseite (4) des Verkleidungsteils (2) andererseits anliegt.

10. Ultraschallsensoranordnung (1) nach Anspruch 9,
**dadurch gekennzeichnet, dass**
in dem Zwischenelement (14) zumindest ein Schlitz (21) ausgebildet ist, mittels welchem der Zentralbereich (19) von einem restlichen Bereich (20) des Zwischenelements (14) schwingungstechnisch entkoppelt ist.

11. Ultraschallsensoranordnung (1) nach Anspruch 9 oder 10,
**dadurch gekennzeichnet, dass**
die Frontseite (9) der Membran (7) mit dem Zentralbereich (19) verklebt ist.

12. Ultraschallsensoranordnung (1) nach Anspruch 8 oder 11,
**dadurch gekennzeichnet, dass**
die Verklebung der Frontseite (9) der Membran (7) mit dem Zentralbereich (19) oder mit der Rückseite (4) des Verkleidungsteils (2) durch einen anderen Klebstoff als die Verklebung des Versteifungselements (11) mit dem Zwischenelement (14) und/oder als die Verklebung des Zwischenelements (14) mit dem Verkleidungsteil (2) realisiert ist.

13. Vorrichtung (3) für ein Kraftfahrzeug, mit einem Ultraschallsensor (5), welcher eine topfförmige Membran (7) zum Aussenden und/oder Empfangen von Ultraschallsignalen aufweist, und mit einem um die Membran (7) herum angeordneten Versteifungselement (11) mit einer Durchgangsöffnung (12), durch welche sich die Membran (7) hindurch erstreckt,
**dadurch gekennzeichnet, dass**
an einer vom Ultraschallsensor (5) abgewandten Frontseite (13) des Versteifungselements (11) ein plattenförmiges Zwischenelement (14) aus Metall anliegend angeordnet ist, über welches das Versteifungselement (11) an einer Rückseite (4) eines Verkleidungsteils (2) des Kraftfahrzeugs befestigbar ist und welches aus einem anderen Material als das Versteifungselement (11) und das Verkleidungsteil (2) gebildet ist,
wobei das Material des Zwischenelements (14) einen Längenausdehnungskoeffizienten aufweist, welcher zwischen den Koeffizienten der jeweiligen Materialien des Versteifungselements (11) und des Verkleidungsteils (2) liegt, wobei das Zwischenelement (14) einerseits mit der Rückseite (4) des Verkleidungsteils (2) und andererseits mit der Frontseite (13) des Versteifungselements (11) verklebt ist.

14. Verfahren zum Herstellen einer Ultraschallsensoranordnung (1) für ein Kraftfahrzeug durch Bereitstellen eines Verkleidungsteils (2) und eines Ultraschallsensors (5) mit einer topfförmigen Membran (7) zum Aussenden und/oder Empfangen von Ultraschallsignalen, und Bereitstellen eines Versteifungselements (11) mit einer Durchgangsöffnung (12), durch welche die Membran (7) hindurch gesteckt wird, wobei der Ultraschallsensor (5) und das Versteifungselement (11) an einer Rückseite (4) des Verkleidungsteils (2) angeordnet werden, sodass der Ultraschallsensor (5) die Ultraschallsignale durch das Verkleidungsteil (2) hindurch aussendet und/oder empfängt,
**dadurch gekennzeichnet, dass**
zwischen der Rückseite (4) des Verkleidungsteils (2) und einer dem Verkleidungsteil (2) zugewandten Frontseite (13) des Versteifungselements (11) ein plattenförmiges Zwischenelement (14) aus Metall angeordnet wird, welches mit der Rückseite (4) des Verkleidungsteils (2) einerseits und mit der Frontseite (13) des Versteifungselements (11) andererseits in Anlage gebracht wird und welches aus einem anderen Material als das Versteifungselement (11) und das Verkleidungsteil (2) gebildet wird, wobei das Material des Zwischenelements (14) einen Längenausdehnungskoeffizienten aufweist, welcher zwischen den Koeffizienten der jeweiligen Materialien des Versteifungselements (11) und des Verkleidungsteils (2) liegt, wobei das Zwischenelement (14) einerseits mit der Rückseite (4) des Verkleidungsteils (2) und andererseits mit der Frontseite (13) des Versteifungselements (11) verklebt wird.

## Claims

1. Ultrasonic sensor arrangement (1) for a motor vehicle, comprising a trim part (2) and an ultrasonic sensor (5), which comprises a pot-shaped membrane (7) for emitting and/or receiving ultrasonic signals, and comprising a stiffening element (11) arranged around the membrane (7) and having a passage opening (12), through which the membrane (7) extends, wherein the ultrasonic sensor (5) and the stiffening element (11) are arranged on a rear side (4) of the trim part (2) so that the ultrasonic sensor (5) is configured for emitting and/or receiving the ultrasonic signals through the trim part (2),
**characterized in that**
between the rear side (4) of the trim part (2) and a front side (13) of the stiffening element (11), which faces the trim part (2), a plate-shaped intermediate element (14) made of metal is arranged, which contacts the rear side (4) of the trim part (2), on the one hand, and the front side (13) of the stiffening element (11), on the other hand, and is formed from a different material than the stiffening element (11) and the trim part (2), wherein the material of the intermediate element (14) has a longitudinal expansion coefficient, which lies between the coefficients of the respective materials of the stiffening element (11) and the trim part (2), wherein the intermediate element (14) is glued together with the rear side (4) of the trim part (2), on the one hand, and with the front side (13) of the stiffening element (11), on the other hand.

2. Ultrasonic sensor arrangement (1) according to claim 1,
**characterized in that**
the stiffening element (11) is formed from ceramics.

3. Ultrasonic sensor arrangement (1) according to claim 1 or 2,
**characterized in that**
the material of the intermediate element (14) is aluminium.

4. Ultrasonic sensor arrangement (1) according to any one of the preceding claims,
**characterized in that**
a thickness of the intermediate element (14) lies in a value range of 0.2 mm to 0.4 mm, in particular amounts to 0.3 mm.

5. Ultrasonic sensor arrangement (1) according to any one of the preceding claims,
**characterized in that**
the intermediate element (14) is configured to comprise a coating.

6. Ultrasonic sensor arrangement (1) according to any one of the preceding claims,
**characterized in that**
the adhesive joint of the intermediate element (14) with the trim part (2) is realized by a different glue than the adhesive joint with the stiffening element (11).

7. Ultrasonic sensor arrangement (1) according to any one of the preceding claims,
**characterized in that**
the intermediate element (14) in its radial edge region comprises an at least partly circumferential bar (16), which is coated by injection moulding with a plastic material (17), wherein in particular by the plastic material (17) at least one locking element (18) is integrally formed on the bar (16).

8. Ultrasonic sensor arrangement (1) according to any one of the preceding claims,
**characterized in that**
the intermediate element (14) comprises a passage (15), which is arranged concentrically with the passage opening (12) of the stiffening element (11) and through which the membrane (7) of the ultrasonic sensor (5) extends, wherein the membrane (7) is brought into contact with the rear side (4) of the trim part (2).

9. Ultrasonic sensor arrangement (1) according to any one of claims 1 to 7,
**characterized in that**
the intermediate element (14) comprises a central portion (19), which is arranged between the membrane (7) of the ultrasonic sensor (5) and the rear side (4) of the trim part (2) so that the central portion (19) contacts a front side (9) of the membrane (7), on the one hand, and the rear side (4) of the trim part (2), on the other hand.

10. Ultrasonic sensor arrangement (1) according to claim 9,
**characterized in that**
in the intermediate element (14) at least one slot (21) is formed, by which the central portion (19) is vibration-decoupled from a remaining portion (20) of the intermediate element (14).

11. Ultrasonic sensor arrangement (1) according to claim 9 or 10,
**characterized in that**
the front side (9) of the membrane (7) is glued together with the central portion (19).

12. Ultrasonic sensor arrangement (1) according to claim 8 or 11,
**characterized in that**
the adhesive joint of the front side (9) of the membrane (7) with the central portion (19) or with the rear side (4) of the trim part (2) is realized by a different glue than the adhesive joint of the stiffening element (11) with the intermediate element (14) and/or than the adhesive joint of the intermediate element (14) with the trim part (2).

13. Device (3) for a motor vehicle, comprising an ultrasonic sensor (5), which comprises a pot-shaped membrane (7) for emitting and/or receiving ultrasonic sensor signals, and comprising a stiffening element (11) arranged around the membrane (7) and having a passage opening (12), through which the membrane (7) extends,
**characterized in that**
on a front side (13) of the stiffening element (11) facing away from the ultrasonic sensor (5) a plate-shaped intermediate element (14) made of metal is arranged in contact, via which the stiffening element (11) is attachable to a rear side (4) of a trim part (2) of the motor vehicle and which is formed from a different material than the stiffening element (11) and the trim part (2), wherein the material of the intermediate element (14) has a longitudinal expansion coefficient, which lies between the coefficients of the respective materials of the stiffening element (11) and the trim part (2), wherein the interim element (14) is glued together with the rear side (4) of the trim part (2), on the one hand, and with the front side (13) of the stiffening element (11), on the other hand.

14. Method for manufacturing an ultrasonic sensor arrangement (1) for a motor vehicle by providing a trim part (2) and an ultrasonic sensor (5) comprising a pot-shaped membrane (7) for emitting and/or receiving ultrasonic signals, and providing a stiffening element (11) comprising a passage opening (12), through which the membrane (7) is inserted, wherein the ultrasonic sensor (5) and the stiffening element (11) are arranged on a rear side (4) of the trim part (2) so that the ultrasonic sensor (5) emits and/or receives the ultrasonic signals through the trim part (2),
**characterized in that**
between the rear side (4) of the trim part (2) and a front side (13) of the stiffening element (11) facing the trim part (2), a plate-shaped intermediate element (14) made of metal is arranged, which is brought into contact with the rear side (4) of the trim part (2), on the one hand, and with the front side (13) of the stiffening element (11), on the other hand, and which is formed of a different material than the stiffening element (11) and the trim part (2), wherein the material of the intermediate element (14) has a longitudinal expansion coefficient, which lies between the coefficients of the respective materials of the stiffening element (11) and the trim element (2), wherein the intermediate element (14) is glued together with the rear side (4) of the trim part (2), on the one hand, and with the front side (13) of the stiffening element (11), on the other hand.

## Revendications

1. Agencement de capteurs à ultrasons (1) pour un véhicule, avec une partie habillage (2) et un capteur à ultrasons (5), lequel présente une membrane en forme de pot (7), destinée à émettre et / ou à recevoir des signaux ultrasonores et avec un élément raidisseur (11), agencé tout autour de la membrane (7) avec une ouverture de passage (12), à travers laquelle s'étend la membrane (7), le capteur à ultrasons (5) et l'élément raidisseur (11) étant agencés contre une face arrière (4) de la partie habillage (2), de sorte que le capteur à ultrasons (5), destiné à émettre et / ou à recevoir les signaux ultrasonores, est constitué par le biais de la partie habillage (2),
**caractérisé en ce que**,
entre la face arrière (4) de la partie habillage (2) et une face avant (13) de l'élément raidisseur (11), tournée vers la partie habillage (2), un élément intermédiaire en forme de plaque (14), en métal, est agencé, lequel s'appuie d'une part contre la face arrière (4) de la partie habillage (2) et d'autre part contre la face avant (13) de l'élément raidisseur (11) et est formé dans un autre matériau que l'élément raidisseur (11) et la partie habillage (2),
le matériau de l'élément intermédiaire (14) présentant un coefficient de dilatation linéaire, lequel se situe entre les coefficients des matériaux respectifs de l'élément raidisseur (11) et de la partie habillage (2),
l'élément intermédiaire (14) étant collé d'une part avec la face arrière (4) de la partie habillage (2) et d'autre part avec la face avant (13) de l'élément raidisseur (11).

2. Agencement de capteurs à ultrasons (1) selon la revendication 1,
**caractérisé en ce que**
l'élément raidisseur (11) est formé en céramique.

3. Agencement de capteurs à ultrasons (1) selon la revendication 1 ou 2,
**caractérisé en ce que**
le matériau de l'élément intermédiaire (14) est de l'aluminium.

4. Agencement de capteurs à ultrasons (1) selon l'une des revendications précédentes,
**caractérisé en ce**
**qu'**une épaisseur de l'élément intermédiaire (14) se situe dans une plage de valeurs de 0,2 mm à 0,4 mm, en particulier 0,3 mm.

5. Agencement de capteurs à ultrasons (1) selon l'une des revendications précédentes,
**caractérisé en ce que**
l'élément intermédiaire (14) est constitué avec un revêtement.

6. Agencement de capteurs à ultrasons (1) selon l'une des revendications précédentes,
**caractérisé en ce que**
le collage de l'élément intermédiaire (14) avec la partie habillage (2) est réalisé avec un autre adhésif que le collage avec l'élément raidisseur (11).

7. Agencement de capteurs à ultrasons (1) selon l'une des revendications précédentes,
**caractérisé en ce que**
l'élément intermédiaire (14) présente, dans sa zone de bordure radiale, une entretoise au moins partiellement périphérique (16), laquelle est enrobée par injection avec un matériau plastique (17), au moins un élément d'encliquetage (18) étant moulé contre l'entretoise (16) en particulier par le biais du matériau plastique (17).

8. Agencement de capteurs à ultrasons (1) selon l'une des revendications précédentes,
**caractérisé en ce que**
l'élément intermédiaire (14) présente une ouverture de passage (15), agencée concentriquement avec l'ouverture de passage (12) de l'élément raidisseur (11), à travers laquelle s'étend la membrane (7) du capteur à ultrasons (5), la membrane (7) étant amenée en appui avec la face arrière (4) de la partie habillage (2).

9. Agencement de capteurs à ultrasons (1) selon l'une des revendications 1 à 7,
**caractérisé en ce que**
l'élément intermédiaire (14) présente une zone centrale (19), laquelle est agencée entre la membrane (7) du capteur à ultrasons (5) et la face arrière (4) de la partie habillage (2), de sorte que la zone centrale (19) s'appuie contre une face avant (9) de la membrane (7) d'une part et contre la face arrière (4) de la partie habillage (2) d'autre part.

10. Agencement de capteurs à ultrasons (1) selon la revendication 9,
**caractérisé en ce que**,
dans l'élément intermédiaire (14), est constituée au moins une fente (21), au moyen de laquelle la zone centrale (19) est découplée par vibrations d'une zone résiduelle (20) de l'élément intermédiaire (14).

11. Agencement de capteurs à ultrasons (1) selon la revendication 9 ou 10,
**caractérisé en ce que**
la face avant (9) de la membrane (7) est collée avec la zone centrale (19).

12. Agencement de capteurs à ultrasons (1) selon la revendication 8 ou 11,
**caractérisé en ce que**
le collage de la face avant (9) de la membrane (7) avec la zone centrale (19) ou avec la face arrière (4) de la partie habillage (2) est réalisé par le biais d'un autre adhésif que le collage de l'élément raidisseur (11) avec l'élément intermédiaire (14) et / ou que le collage de l'élément intermédiaire (14) avec la partie habillage (2).

13. Appareil (3) pour un véhicule, avec un capteur à ultrasons (5), lequel présente une membrane en forme de pot (7), destinée à émettre et / ou à recevoir des signaux ultrasonores et avec un élément raidisseur (11), agencé tout autour de la membrane (7), avec une ouverture de passage (12), à travers laquelle s'étend la membrane (7),
**caractérisé en ce**
**qu'**un élément intermédiaire en forme de plaque (14), en métal, est agencé en appui contre une face avant (13) de l'élément raidisseur (11), détournée du capteur à ultrasons (5), par l'intermédiaire duquel l'élément raidisseur (11) peut être fixé contre une face arrière (4) d'une partie habillage (2) du véhicule et laquelle est formée dans un matériau autre que celui de l'élément raidisseur (11) et de la partie habillage (2),
le matériau de l'élément intermédiaire (14) présentant un coefficient de dilatation linéaire, lequel se situe entre les coefficients des matériaux respectifs de l'élément raidisseur (11) et de la partie habillage (2),
l'élément intermédiaire (14) étant collé d'une part avec la face arrière (4) de la partie habillage (2) et d'autre part avec la face avant (13) de l'élément raidisseur (11).

14. Procédé de fabrication d'un agencement de capteurs à ultrasons (1) pour un véhicule par le biais de la mise à disposition d'une partie habillage (2) et d'un capteur à ultrasons (5), avec une membrane en forme de pot (7), destinée à émettre et / ou à recevoir des signaux ultrasonores et de la mise à disposition d'un élément raidisseur (11) avec une ouverture de passage (12), à travers laquelle s'étend la membrane (7), le capteur à ultrasons (5) et l'élément raidisseur (11) étant agencés sur une face arrière (4) de la partie habillage (2), de sorte que le capteur à ultrasons (5) émet et / ou reçoit les signaux ultrasonores par le biais de la partie habillage (2),
**caractérisé en ce que**,
entre la face arrière (4) de la partie habillage (2) et une face avant (13) de l'élément raidisseur (11), tournée vers la partie habillage (2), un élément intermédiaire en forme de plaque (14), en métal, est agencé, lequel est mis en appui avec la face arrière (4) de la partie habillage (2) d'une part et avec la face avant (13) de l'élément raidisseur (11) d'autre part et lequel est formé dans un matériau autre que celui de l'élément raidisseur (11) et de la partie habillage (2), le matériau de l'élément intermédiaire (14) présentant un coefficient de dilatation linéaire, lequel se situe entre les coefficients des matériaux respectifs de l'élément raidisseur (11) et de la partie habillage (2), l'élément intermédiaire (14) étant collé d'une part avec la face arrière (4) de la partie habillage (2) et d'autre part avec la face avant (13) de l'élément raidisseur (11).
